# EUROPÄISCHE PATENTANMELDUNG

(11) **EP 4 821 404 A1**
(43) Veröffentlichungstag der Anmeldung: **14.10.2026**
(21) Anmeldenummer: 25170143.9
(22) Anmeldetag: 11.04.2025
(51) Int. Cl.: A47G 19/22, A45F 3/18, B65D 81/32, A47G 21/18

(54) **TRINKFLASCHE**

(71) Anmelder: HOLY Softdrinks GmbH, 10405 Berlin (DE)
(72) Erfinder: HORSCH, Mathias Karl Ulrich, 10243 Berlin (DE); JOST, Frederick Alexander, 10407 Berlin (DE); NAß, Philipp Norbert, 10407 Berlin (DE)
(74) Vertreter: Christ, Niko

(57) **Zusammenfassung**

Trinkflasche umfassend einen Becher (3), einen Innenbehälter (4) zur Aufnahme eines Additivbehälters (5) mit einem Additiv, und einen Deckel (2) mit einem Entnahmestutzen (211), wobei dem Deckel (2) eine Verbindungsleitung (27) zur Verbindung des Additivbehälters (5) mit dem Entnahmestutzen (211) zugeordnet ist, welche in eine seitliche Zugangsöffnung (2112) an einer Innenwand (2111) des Entnahmestutzens (211) mündet,
wobei der Innenbehälter (4) an der Innenwand des Bechers (3), befestigt ist und dass Mittel zur lagerichtigen Positionierung des Deckels (2) auf dem Becher (3) über jeweilige Verbindungsränder (212, 32) derart vorgesehen sind, dass die Verbindungsleitung (27) mit einem Kontaktstutzen (271), welcher an ihrem dem Additivbehälter (5) zugewandten Ende angeordnet ist, einen Auslass (521) des Additivbehälters (5) dichtend kontaktiert

## Beschreibung

Die vorliegende Erfindung betrifft eine Trinkflasche umfassend einen Becher zur Aufnahme einer Flüssigkeit, einen Innenbehälter zur Aufnahme eines Additivbehälters mit einem Additiv, und einen Deckel mit einem Entnahmestutzen zur Entnahme der in dem Becher aufgenommenen Flüssigkeit, wobei dem Deckel eine Verbindungsleitung zur Verbindung des Additivbehälters mit dem Entnahmestutzen zugeordnet ist, welche in eine seitliche Zugangsöffnung an einer Innenwand des Entnahmestutzens mündet.

Eine derartige Trinkflasche ist bereits aus der WO 2024/074924 A1 vorbekannt. Dort ist vorgesehen, dass eine Trinkflasche einen Becher und einen Deckel umfasst, wobei in den Deckel ein Innenbehälter zur Aufnahme eines Additivbehälters eingearbeitet ist. Alternativ schlägt die WO 2024/074924 A1 vor, dass der Innenbehälter mit dem Additivbehälter an einer Entnahmeleitung befestigt ist, die an einem Entnahmestutzen im Deckel angebracht ist. In jedem Fall ist letzten Endes der Innenbehälter mit dem Deckel verbunden und beide Teile werden üblicherweise einheitlich aus dem Becher entnommen.

Die zugrundeliegende Idee besteht darin, eine Flüssigkeit, wie beispielsweise Wasser, mit einem Additiv zu versehen, wobei die Mischung aus der Flüssigkeit und dem Additiv erst beim Trinken hergestellt wird. In dem Becher der Trinkflasche wird die Flüssigkeit eingefüllt und im Zuge der Entnahme über einen Entnahmestutzen aus der Flasche gesaugt. Es wird hierbei ein geringer Unterdruck im Bereich des Entnahmestutzens erzeugt, aufgrund dessen die Flüssigkeit durch eine Entnahmeöffnung herausbefördert wird. Das Additiv ist über eine seitliche Zugangsöffnung in einer Innenwand des Entnahmestutzens zuführbar, indem der Additivbehälter über einen Leitungsanschluss mit der Zugangsöffnung verbunden wird. Aufgrund des Venturieffekts zieht die an der Zugangsöffnung vorbeiströmende Flüssigkeit das Additiv aus der Zugangsöffnung heraus, so dass es sich im Entnahmestutzen mit der Flüssigkeit vermischen kann.

Beide Ausgestaltungen der WO 2024/074924 A1 bringen Nachteile mit sich. Soweit der Additivbehälter in einem Innenbehälter aufgenommen ist, der am Behälterdeckel befestigt ist, muss entweder zunächst händisch ein Schlauch zu dem Leitungsanschluss der Zugangsöffnung verlegt werden, oder es wird ein Verbindungsteil eingesetzt, in dem eine Verstelleinrichtung zur Beeinflussung der beigemischten Additivmenge eingesetzt wird. Diese Verstelleinrichtung weist einen Gang auf, durch den das Additiv befördert wird, so dass das Additiv in die Spalte zwischen der Verstelleinrichtung und dem Verbindungsteil geraten und dieses zusetzen kann. Sie wird dadurch Teil der Verbindungsleitung zwischen dem Additivbehälter und der Zugangsöffnung und muss gegebenenfalls bei einer Verschmutzung der Verbindungsleitung mit erneuert werden. Beim Befüllen der Trinkflasche muss der Innenbehälter mit entnommen und es muss genügend Platz in der Trinkflasche freigelassen werden, damit der Innenbehälter wieder in die Trinkflasche passt. Bei einer zu starken Befüllung drückt es die eingefüllte Flüssigkeit beim Schließen wieder heraus. Ein Betrieb ohne den Innenbehälter ist bei dieser Ausgestaltung nicht möglich, es sei denn auch der Deckel wird weggelassen.

Eine Verwendung des Innenbehälters an der Entnahmeleitung bedeutet, dass eine Bedienung nur durch ein Herausheben aus der Trinkflüssigkeit erfolgen kann, so dass immer wieder ein Kontakt mit der Flüssigkeit hergestellt werden muss. Dies muss als unhygienisch und aufgrund der Verlegung der verwendeten Verbindungsleitungen auch als sehr kompliziert angesehen werden.

Konzeptionell ähnelt das vorbeschriebene System dem in der WO 2017/152192 A1 beschriebenen System, bei welchem der Innenbehälter dem Deckel lösbar zugeordnet ist und Flüssigkeit und Additiv direkt oberhalb des Innenbehälters gemischt werden. Der Grad der Beimischung des Additivs kann hierbei durch eine gegenseitige Verdrehung der Komponenten eines zweiteiligen Deckels erfolgen, welcher einen teilweisen Verschluss des in dem Deckel aufgenommenen Additivbehälters bewirkt.

Die US 11,905,097 B2 zeigt weiter einen Additivbehälter, welcher auf den eigentlichen Becher aufgesetzt wird, wobei auch hier die Mischung im Entnahmestutzen aus den beiden übereinanderliegenden Behältern erfolgt.

Weiter ist auf die WO 2014/073292 A1, die EP 2 931 619 B1, die US 11,458,443 B2, die EP 3 220 783 B1 und die US 11,213,159 B2 zu verweisen. Sämtliche dieser Schriften beschreiben eine Trinkflasche, bei welcher in dem Deckel einer Trinkflasche ein Additiv bereitgehalten wird, welches der in dem Behälter aufgenommenen Flüssigkeit beigemischt werden soll.

Allgemein ist es bekannt, derartige Additive zu Getränken, insbesondere zu Leitungswasser, beizumischen. Dies ist in verschiedenen Darreichungsformen bekannt, so etwa als Pulver oder als Sirup, wobei eine Darreichung als Pulver im Allgemeinen eine Mischung vorab erfolgt. Die Verwendung von Sirup erlaubt eine Beimischung während des Trinkens. Die Additive können die Flüssigkeit rein geschmacklich ergänzen, oder aber zusätzliche Stoffe wie Koffein enthalten, welche eine stimulierende Wirkung auf den Benutzer entfaltet.

Die aus dem Stand der Technik vorbekannten Lösungen erscheinen für die praktische Anwendung allerdings sehr komplex, und ermöglichen zumeist einen Betrieb lediglich mit dem eingesetzten Innenbehälter, so dass eine Nutzung der betreffenden Trinkflasche als reine Wasserflasche nicht möglich ist.

Hiervon ausgehend liegt der vorliegenden Erfindung die Aufgabe zugrunde, eine Trinkflasche bereitzustellen, welche sehr einfach handhabbar ist, leicht gereinigt und hygienisch bedient werden kann und schließlich auch unproblematisch ohne eingesetzten Innenbehälter verwendet werden kann.

Dies gelingt durch eine Trinkflasche gemäß den Merkmalen des unabhängigen Anspruchs 1. Sinnvolle Ausgestaltungen einer solchen Trinkflasche können den sich anschließenden abhängigen Ansprüchen entnommen werden.

Vorgesehen ist insoweit eine Trinkflasche umfassend einen Becher zur Aufnahme einer Flüssigkeit, einen Innenbehälter zur Aufnahme eines Additivbehälters mit einem Additiv, und einen Deckel mit einem Entnahmestutzen zur Entnahme der in dem Becher aufgenommenen Flüssigkeit, wobei dem Deckel eine Verbindungsleitung zur Verbindung des Additivbehälters mit dem Entnahmestutzen zugeordnet ist, welche in eine seitliche Zugangsöffnung an einer Innenwand des Entnahmestutzens mündet. Eine solche Trinkflasche ist erfindungsgemäß dadurch gekennzeichnet, dass der Innenbehälter an der Innenwand des Bechers, vorzugsweise lösbar, befestigt ist und dass Mittel zur lagerichtigen Positionierung des Deckels auf dem Becher über jeweilige Verbindungsränder derart vorgesehen sind, dass die Verbindungsleitung mit einem Kontaktstutzen, welcher an ihrem dem Additivbehälter zugewandten Ende angeordnet ist, einen Auslass des Additivbehälters dichtend kontaktiert und der Deckel mithilfe von Spannmitteln mit dem Becher entlang der jeweiligen Verbindungsränder dichtend verbindbar ist.

Im Ergebnis bedarf es beim Einsetzen eines Additivbehälters bei einer solchen erfindungsgemäßen Trinkflasche keines Verbindens oder Ausrichtens des Additivbehälters, weil der Additivbehälter immer direkt dem Becher zugeordnet wird. Der Innenbehälter, der dem Becher zur lagerichtigen Positionierung des Additivbehälters zugeordnet ist, ist an der Becherwand lösbar befestigt, so dass er zum Einen auch entnommen und die Trinkflasche auch ohne den Innenbehälter benutzt werden kann, zum Anderen kann der Innenbehälter beim Befüllen des Bechers in diesem verbleiben, so dass ein Überlaufen des Bechers beim Einsetzen des Innenbehälters vermieden ist.

Nach dem Abnehmen des Deckels wird die Trinkflasche bestimmungsgemäß dadurch vorbereitet, dass der Becher mit einer Flüssigkeit, etwa mit Trinkwasser, gefüllt wird und ein Additivbehälter in dem Innenbehälter eingesetzt wird. Der Innenbecher sorgt dafür, dass der Additivbehälter in einer definierten Position gehalten ist. Nun kann der Deckel zunächst lagerichtig positioniert werden, bevor die Spannmittel den Deckel wieder mit dem Becher verbinden. Dabei wird der Kontaktstutzen aufgrund der lagerichtigen Positionierung genau auf einen in Position gehaltenen Auslass eines Auslasspassstücks des Additivbehälters gedrückt, so dass eine dichtende Verbindung hergestellt wird. Wird nun die Trinkflasche geneigt und über den Entnahmestutzen Flüssigkeit angesaugt, so wird das Additiv über eine als Venturidüse funktionierende Zugangsöffnung in einer Innenwand des Entnahmestutzens angesaugt und im Entnahmestutzen direkt gemischt. Wird der Innenbehälter mit dem Additivbehälter weggelassen, so gelangt über den Kontaktstutzen ebenfalls Wasser in den Entnahmestutzen oder die Verbindungsleitung kann geschlossen werden.

In konkreter Ausgestaltung kann zunächst vorgesehen sein, dass der Becher und der Deckel miteinander korrespondierende, runde Verbindungsränder aufweisen, wobei die Spannmittel eine an einem ersten Verbindungsrand frei drehend aufgenommene Überwurfmutter umfassen, welche mit wenigstens einem an einem korrespondierenden zweiten Verbindungsrand angeformten Gewinde oder Gewindeabschnitt zusammenwirkt. Auf diese Weise kann eine Verspannung zwischen dem Deckel und dem Becher in einer einfachen und effektiven Art und Weise erreicht werden, welche selbsterklärend und belastbar ist. Je weiter die Überwurfmutter auf das Gewinde geschraubt wird, desto größer wird die Spannung zwischen Deckel und Becher. Die Überwurfmutter als solche ist eine Art Manschette, welcher an dem Deckel frei drehend aufgenommen ist, indem eine Einkragung der Überwurfmutter in eine korrespondierende Nut des Deckels eingreift. Ein Innengewinde an dem Rand der Überwurfmutter, welcher von dem Deckel abgewandt ist, kann mit einem Außengewinde des Bechers zusammenwirken. Alternativ zu einer Überwurfmutter sind gerade im Fall von aufeinandertreffenden Verbindungsrändern mit rundem Querschnitt auch weitere Lösungen wie ein Bajonettverschluss denkbar.

Soweit hingegen eine Festlegung auf einen runden Querschnitt nicht erfolgen soll, kann dennoch eine dichte Verbindung allgemein mithilfe nicht drehender Spannmittel hergestellt werden. Solange der Becher und der Deckel miteinander korrespondierende Verbindungsränder aufweisen, seien diese rund oder unrund, so können die Spannmittel wenigstens einen, einem ersten Verbindungsrand zugeordneten, Schnappverschluss umfassen, welcher mit wenigstens einem, einem zweiten Verbindungsrand zugeordneten, Rastelement zusammenwirkt. Ob der Schnappverschluss oder das Rastelement hierbei dem Deckel oder dem Becher zugeordnet ist, spielt für die Verbindung nur eine untergeordnete Rolle. Wesentlich ist in erster Linie eine Verspannung und ein Verbleib in der korrekten Position, so dass die Verspannung so erfolgen kann, dass der Kontaktstutzen mit dem Auslass des Additivbehälters kommuniziert.

Die Befestigung des Innenbehälters in dem Becher kann mithin dadurch erfolgen, dass der Becher entlang seines Verbindungsrands zumindest abschnittsweise eine inwendige Aufnahmekontur zur Aufnahme eines korrespondierenden Aufnahmerands des Innenbehälters ausbildet. In eine solche Aufnahmekontur kann dann der Innenbehälter mit einer hierzu passenden Haltekontur eingreifen, welche dafür sorgt, dass der Innenbehälter sich in der Aufnahmekontur nicht bewegen kann und während der Benutzung der Trinkflasche, insbesondere während der Verspannung des Bechers mit dem Deckel nicht abrutscht.

Konkret kann die Aufnahmekontur eine Verjüngung der Becherwandung entlang wenigstens eines Abschnitts des Verbindungsrands umfassen, wobei der Innenbehälter eine mit der Aufnahmekontur zumindest abschnittsweise korrespondierende Haltekontur aufweist. Eine Verjüngung des Becherrands ist für den Benutzer leicht aufzufinden und erfordert lediglich ein Einsetzen des Innenbehälters mit dessen Haltekontur in die von der Verjüngung freigegebene Vertiefung. Deren Seitenränder sorgen dafür, dass die Haltekontur seitlich nicht abrutschen kann und ein unterer, entlang der Außenwand des Bechers verlaufender Rand dient als unterer Anschlag. Wenn der Innenbehälter aufgrund einer runden Becherform in einer solchen Vertiefung dreidimensional definiert gehalten ist, kann der Innenbehälter mit seinem dadurch ebenfalls zumindest im Wesentlichen kreisabschnittsförmigen Aufnahmerand sehr einfach in diese Vertiefung eingesteckt und auch wieder entnommen werden. Eine solche Vertiefung funktioniert hierdurch bereits mit sehr geringen Tiefen.

Wesentlich ist im Rahmen der Erfindung, dass der Deckel auf dem Becher lagerichtig positioniert wird, um die Ausrichtung des Auslasses des Additivbehälters zu dem Kontaktstutzen der Verbindungsleitung sicherzustellen. Es ist daher sinnvoll, wenn die Mittel zur lagerichtigen Positionierung des Deckels gegenüber dem Becher wenigstens ein Anschlagelement umfassen, welches an einem korrespondierenden Gegenanschlag, insbesondere des Innenbehälters, drehfest anliegt. Ein solches Anschlagelement kann hierbei etwa an der Innenseite des Deckels ausgebildet sein und bei lagerichtiger Positionierung so an dem Innenbehälter als Gegenanschlag anliegen, dass eine Drehung und/oder ein Versatz des Deckels im Verhältnis zum Innenbehälter verunmöglicht ist. Ist der Deckel also einmal korrekt positioniert, so soll die Verbindung zwischen dem Deckel und dem Becher dann hergestellt werden können, ohne dass der Deckel gegenüber dem Becher bewegt werden muss.

Das Anschlagelement kann in diesem Zusammenhang einen Anschlagsteg ausbilden, welcher bei einer lagerichtigen Positionierung des Deckels auf dem Becher entlang eines innenliegenden Anlagerands des Innenbehälters verläuft. Dadurch kann die Positionierung zwischen Innenbehälter und Deckel sichergestellt sein und dabei die Form des Innenbehälters aufnehmen. Alternativ kann das Anschlagelement einen Anschlagsteg ausbilden, welcher bei einer lagerichtigen Positionierung des Deckels auf dem Becher entlang einer Außenkontur des Bechers verläuft und dessen Enden an dem Innenbehälter anliegen. In diesem Fall verläuft der Anschlagsteg innen an der Becherwand entlang und weist zwei Enden auf, die gegebenenfalls gegen den Innenbehälter anschlagen können. Diese Enden können in diesem Zusammenhang auch eine Verdickung aufweisen, so dass sie robuster und belastbarer sind.

Weiter kann mit besonderem Vorteil vorgesehen sein, dass bei lagerichtiger Positionierung des Deckels auf dem Becher zwischen den Verbindungsrändern eine umlaufende Dichtung zugeordnet ist, welche mit dem Verbindungsrand des Deckels und einer Dichtkontur des Innenbehälters dichtend zusammenwirkt. Während eine solche Dichtung allgemein den offensichtlichen Zweck erfüllt, dass die Flüssigkeit nicht zwischen dem Becher und dem Deckel austritt, kann diese aufgrund der vorbeschriebenen Konstruktion auch den Innenbehälter abdichten und dafür sorgen, dass die Flüssigkeit auch nicht in den Innenbehälter eintritt und sich dort sammelt. Zwar würde sie dort keinen Schaden anrichten, jedoch erscheint es lästig, wenn die Flüssigkeit nicht zum Trinken zur Verfügung stünde und regelmäßig aus dem Innenbehälter ausgeleert werden müsste. Die Dichtung kann insoweit eine äußere Kontur entlang des Becherrands und eine innere Kontur entlang des Rands des Innenbehälters aufweisen.

Aufgrund der Abdichtung des Innenbehälters gegenüber dem Becher kann zudem bevorzugtermaßen der Deckel wenigstens eine Belüftungsöffnung zum Nachströmen von Luft aufweisen, welche in einen Bereich des Deckels mündet, welcher bei dessen lagerichtiger Positionierung über dem Becher, insbesondere über dem in dem Becher aufgenommenen Innenbehälter, liegt. Auf diese Weise kann bei einer fortschreitenden Entleerung des Additivbehälters Luft in den Innenbehälter nachziehen, so dass der Additivbehälter nicht gegen einen stärker werdenden Unterdruck entleert werden muss. Zumindest eine weitere Belüftungsöffnung kann vorgesehen sein, um den Becher zu belüften. Diese mündet außerhalb des Innenbehälters in den Becherinnenraum hinein.

Ferner kann vorgesehen sein, dass die wenigstens eine Belüftungsöffnung an dem Deckel von einer Verschlusslasche übergriffen ist, welche über ein Gelenk mit dem Deckel verbunden ist und ein freies Ende aufweist, dem ein Verschluss zur Abdichtung des Entnahmestutzens zugeordnet ist, wobei der Verschlusslasche wenigstens ein Dichtelement zugeordnet ist, welches die wenigstens eine Belüftungsöffnung dichtend verschließt, wenn der Verschluss mit dem Entnahmestutzen verbunden ist. Eine solche Verschlusslasche verschließt aufgrund der genannten Konstruktion gleichzeitig den Entnahmestutzen und die Belüftungsöffnungen von Becher und/oder Innenbehälter. Auch über die Belüftungsöffnungen kann auf diese Weise die Flüssigkeit nicht aus der Trinkflasche austreten, so lange diese verschlossen ist.

Hierzu kann der Verschluss ein Schraubelement umfassen, welcher mit Gegenschraubelementen des Entnahmestutzens zusammenwirkt. Ein solches Schraubelement hält insoweit sowohl den Verschluss in Position in dem Entnahmestutzen und greift in ein Innengewinde des Entnahmestutzens ein, hält aber auch das wenigstens eine Dichtelement über der wenigstens einen Belüftungsöffnung in Position.

Bedarfsweise kann zudem vorgesehen sein, dass die Verschlusslasche in einer geöffneten Position eine Lagesicherung aufweist, in welcher ein Zurückklappen der Verschlusslasche in Richtung einer geschlossenen Position vermieden ist. Dies kann beispielsweise durch eine Klemmlage realisiert sein oder durch ein Einrasten eines möglichen Rastmittels der Verschlusslasche in ein Gegenrastmittel des Deckels in einer vollständig geöffneten Position. Ein Zurückklappen der Verschlusslasche bei einem Anheben der Trinkflasche wäre insoweit unangenehm, als die Verschlusslasche einer an der Trinkflasche trinkenden Person dann in das Gesicht fallen würde.

Insbesondere kann dem Becher und/oder dem Deckel aber auch eine Tragelasche zugeordnet sein, wobei der Verschluss der Verschlusslasche in einer geöffneten Position der Verschlusslasche derart mit der Tragelasche zusammenwirkt, dass ein Trennen von Verschlusslasche und Tragelasche mehr Kraft erfordert als die Gewichtskraft der Verschlusslasche. Auch dies wird die Verschlusslasche in der offenen Position halten, ohne dass sie mit der Hand besonders festgehalten werden müsste.

Die vorstehend beschriebene Erfindung wird im Folgenden in ihrem Gesamtzusammenhang anhand eines Ausführungsbeispiels näher erläutert.

Es zeigen
- Figur 1: eine Trinkflasche mit einem Becher und einem darauf aufgesetzten Deckel in perspektivischer Darstellung von schräg oben,
- Figur 2: die Trinkflasche gemäß Figur 1 mit über dem Becher abgehobenem Deckel und in dem Becher eingesetztem Innenbehälter in perspektivischer Darstellung,
- Figur 3: den herausgenommenen Innenbehälter aus Figur 2 in perspektivischer Darstellung,
- Figur 4: den über dem Becher aus Figur 2 positionierten Innenbehälter aus Figur 3 in perspektivischer Darstellung,
- Figur 5: ein Detail des Bechers aus Figur 2 mit eingesetztem Innenbehälter gemäß Figur 3,
- Figur 6: einen Additivbehälter zur Verwendung in dem Innenbehälter gemäß Figur 3,
- Figur 7: ein Aufsetzteil eines Auslasspassstücks des Additivbehälters gemäß Figur 6 in einer Draufsicht von unten,
- Figur 8: das Aufsetzteil gemäß Figur 7 in einer seitlichen Querschnittsdarstellung,
- Figur 9: einen Auslassverbinder zur Verprellung mit dem Aufsetzteil gemäß Figuren 7 und 8 in einer Frontalansicht,
- Figur 10: den über dem Becher mit Innenbehälter gemäß Figur 5 positionierten Additivbehälter gemäß Figur 6 in perspektivischer Darstellung,
- Figur 11: ein Detail des Bechers gemäß Figur 5 mit eingesetztem, geschlossenem Additivbehälter in perspektivischer Darstellung,
- Figur 12: das Detail gemäß Figur 11 mit geöffnetem Additivbehälter in perspektivischer Darstellung,
- Figur 13: den geschlossenen Deckel aus Figuren 1 und 2 in perspektivischer Darstellung von schräg oben,
- Figur 14: den Deckel gemäß Figur 13 mit geöffneter Verschlusslasche,
- Figur 15: den Deckel gemäß Figur 14 in perspektivischer Darstellung von schräg unten,
- Figur 16: einen perspektivischen mittigen Schnitt durch den Deckel gemäß Figur 14,
- Figur 17: einen perspektivischen, außermittigen Schnitt durch den Deckel gemäß Figur 14 in der Ebene einer Belüftungsöffnung,
- Figur 18: den Deckel gemäß Figur 14 mit abgenommenem Aufsetzteil in perspektivischer Darstellung,
- Figur 19: einen perspektivischen, mittigen Schnitt durch den Deckel gemäß Figur 18,
- Figur 20: eine Verstelleinrichtung in einer perspektivischen Explosionsdarstellung,
- Figur 21: einen perspektivischen, mittigen Schnitt durch den geschlossenen Deckel gemäß Figur 13, sowie
- Figur 22: eine Variante der Trinkflasche gemäß Figur 1 mit einer Tragelasche und darin eingehängtem Verschluss.

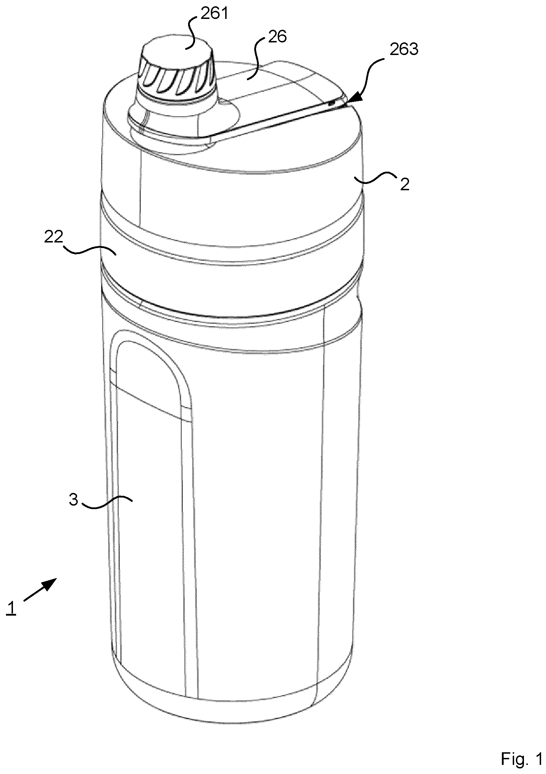

Figur 1 zeigt eine Trinkflasche 1, welche im Wesentlichen aus einem Becher 3 mit einem darauf aufgesetzten Deckel 2 besteht. Der Deckel 2 ist auf dem Becher 3 mithilfe einer Überwurfmutter 22 gesichert, so dass zum Einen der Deckel 2 unverlierbar auf dem Becher 3 gehalten ist, und zum Anderen eine Spannung zwischen dem Deckel 2 und dem Becher 3 erreicht wird.

Um aus der Trinkflasche 1 zu trinken, kann der Verschluss 261 durch Drehen geöffnet werden. Der Verschluss 261 ist unverlierbar an einer Verschlusslasche 26 aufgenommen, welche um ein Gelenk 263 herum schwenkbar an dem Deckel 2 befestigt ist.

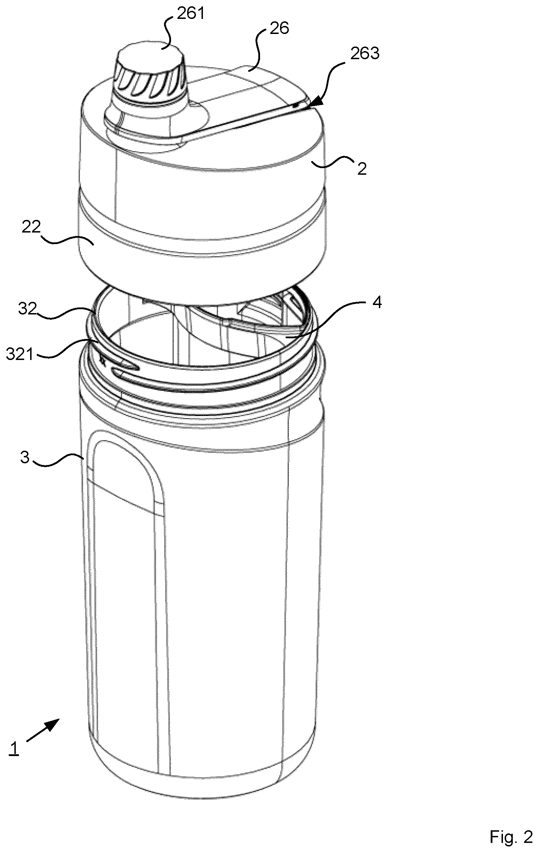

Um hingegen die Trinkflasche 1 zu befüllen, kann die Überwurfmutter 22 linksherum gedreht werden, bis sich der Deckel 2 von dem Becher 3 abheben lässt. Die Ausrichtung des Deckels 2 gegenüber dem Becher 3 verändert sich hierbei nicht, weil die Überwurfmutter 22 drehfrei im Bereich eines ersten Verbindungsrands 212 an dem Deckel 2 aufgehängt ist. Sobald die Überwurfmutter 22 vollständig von einem an dem Becher 3 angeformten Außengewinde 321 gelöst ist, kann der Deckel 2 von einem zweiten Verbindungsrand 32 des Bechers 3 abgehoben werden, wie in Figur 2 gezeigt ist.

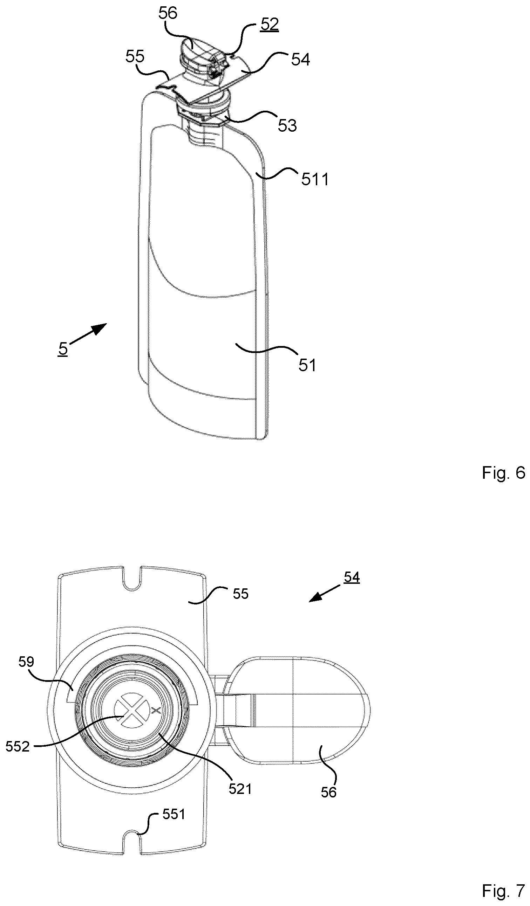

Durch das Abnehmen des Deckels 2 wird der Blick frei für einen in dem Becher 3 eingesetzten Innenbehälter 4. Dieser Innenbehälter 4 dient zur Aufnahme eines Additivbehälters 5, wie später in Figur 6 dargestellt. Ein in dem Additivbehälter 5 aufgenommenes Additiv wird einer in dem Becher 3 aufgenommenen Flüssigkeit beim Trinken aus einem Entnahmestutzen 211 der Trinkflasche 1 beigemischt und kann der Flüssigkeit zusätzliche Inhaltsstoffe wie etwa Geschmacksstoffe hinzufügen. Der Innenbehälter 4 ist in den Becher 3 im Klemmsitz gehalten und kann durch einfaches Anheben aus dem Becher 3 entnommen werden.

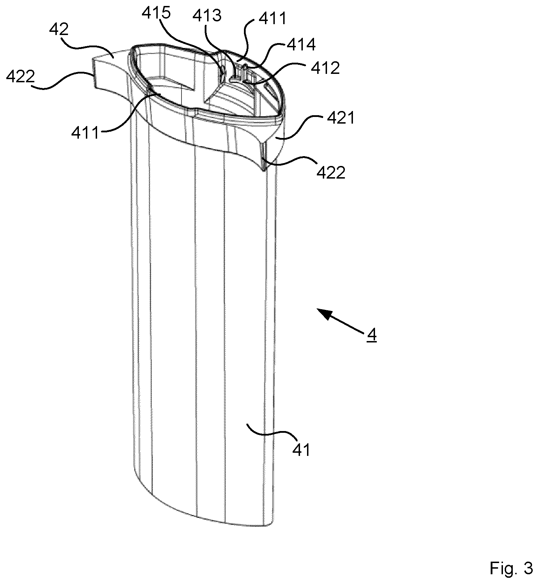

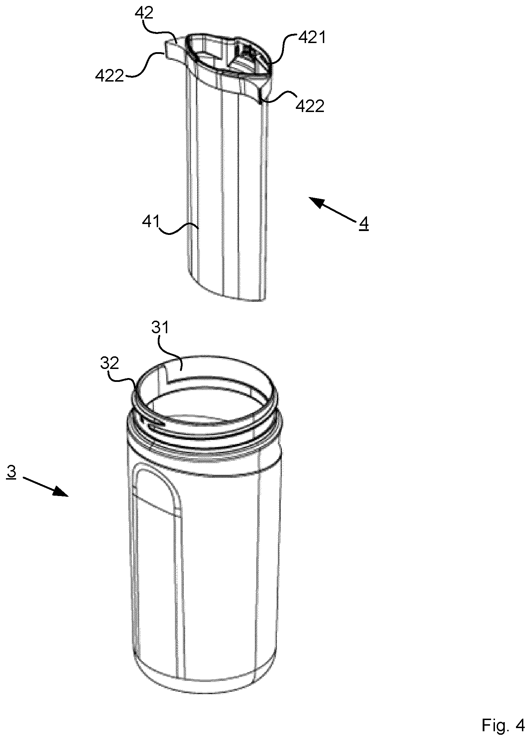

Figur 3 zeigt den herausgenommenen Innenbehälter 4, welcher im Wesentlichen aus einem Innenbecher 41 mit einem Aufnahmerand 42 zur Aufnahme in einer in Figur 4 dargestellten Aufnahmekontur 31 des Bechers 3 besteht. Der Aufnahmerand 42 weist an einer Außenseite eine Haltekontur 421 auf, welche mit Klemmstegen 422 versehen sein kann, um in der Aufnahmekontur 31 des Bechers 3 im Klemmsitz aufgenommen zu werden. Entlang der Außenseite ist der Aufnahmerand 42 im Wesentlichen kreisabschnittförmig, da die Aufnahmekontur der im vorliegenden Fall runden Becherwand des Bechers 3 folgt. Auf der dem Betrachter zugewandten Seite hingegen ist ein ausgewölbter Anlagerand 43 gebildet, welcher zur lagerichtigen Positionierung des Deckels 2 über dem Becher 3 und dem Innenbehälter 4 dient.

In dem Innenbehälter 4 wird seinerseits der Additivbehälter 5 platziert, welcher ein Auslasspassstück 52 besitzt, dessen Kontur mit weiteren Merkmalen des Innenbehälters 4 zusammenwirkt. Für dessen Aufnahme weist der Innenbehälter 4 beiderseitige Verbreiterungen 411 auf, in denen mithilfe von Auflageschultern 412 zum Einen Auflageflächen 413 gebildet sind, auf denen das Auslasspassstück 52 des Additivbehälters 5 mit an ihm gebildeten Auflagekonturen 55 aufgelegt werden kann, zum Anderen ist ein Zentriersteg 414 vorgesehen, welcher neben der reinen Zentrierung an in die Auflagekonturen 55 eingebrachten Zentrierkerben 551 auch dafür sorgt, dass beim Öffnen und Schließen einer Verschlusskappe 56 des Additivbehälters 5 die Lage unverändert bleibt. Auch helfen hierbei Rastnasen 415, welche die Auflagekonturen 55 des Additivbehälters 5 zurückhalten und gegen die Auflageschultern 412 des Innenbehälters 4 drücken. Der Additivbehälter 5 kann in einer solchen Position damit gesichert werden.

Gemäß Figur 4 kann der Innenbehälter 4 in den Becher 3 eingesetzt werden. Den Innenbecher 41 voran wird der Innenbehälter 4 in den Becher 3 eingesteckt, bis der zweite Verbindungsrand 32 des Bechers 3 mit dem oberen Rand des Innenbehälters 4 auf einer Höhe liegt. In dieser Position greift der Aufnahmerand 42 mit seiner Haltekontur 421 in die Aufnahmekontur 31 des Bechers ein. Mithilfe der Klemmstege 422 kann der Innenbehälter 4 in der Aufnahmekontur 31 des Bechers 3 im Klemmsitz gehalten werden.

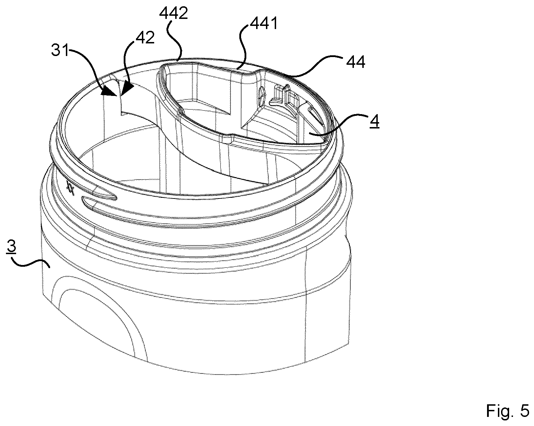

Figur 5 zeigt den eingesetzten Innenbehälter 4 in dem Becher 3. Zu beachten ist hier, dass der an sich offene Innenbehälter 4 eine um den offenen Rand herumlaufende Dichtkontur 44 aufweist, so dass die in dem Becher 3 aufgenommene Flüssigkeit nicht in den Innenbehälter 4 einlaufen kann. Die Dichtkontur 44 umfasst hierbei eine asymmetrische Form mit einer Einbuchtung 441, welche in einen Umlaufkanal 442 mündet. Die Einbuchtung 441 liegt bei lagerichtig positioniertem Deckel 2 unterhalb einer von dem Deckel 2 definierten Belüftungsöffnung 213. Dadurch, dass die Einbuchtung 441 außerhalb der Dichtkontur 44 liegt und mit dem Umlaufkanal 42 in den Becher 3 mündet, kann die Belüftungsöffnung 213 den Becher 3 belüften, so dass während des Trinkens Luft nachströmen kann und der Unterdruck nicht zu groß wird. Auf einer der Einbuchtung 441 gegenüberliegenden Seite ist keine weitere Einbuchtung vorhanden. Eine dort positionierte zweite Belüftungsöffnung 213 mündet damit in den Innenbehälter 4 und sorgt damit dafür, dass auch während der Entnahme von Additiv aus dem Additivbehälter 5 Luft in den Innenbehälter 4 nachströmen kann. Auch eine gleichmäßige Entnahme von Additiv kann damit gewährleistet werden.

Figur 6 zeigt einen Additivbehälter 5 zum Einsatz in der Trinkflasche 1. Ein solcher Additivbehälter 5 besteht im Wesentlichen aus einem Folienbeutel 51, welcher aus verschweißten Folienbahnen, vorzugsweise aus Polypropylen, hergestellt ist. An den Rändern ist hierzu ein Schweißrand 511 vorgesehen, welcher sicherstellt, dass die Folien dicht miteinander verbunden sind. In diese Verbindung eingeschweißt ist ein Auslassverbinder 53, auf den ein Aufsetzteil 54 aufgeprellt wird. Das so entstehende Auslasspassstück 52 weist zudem eine Auflagekontur 55 zur form- und kraftschlüssigen Kontaktierung des Innenbehälters 4 auf, sowie eine Verschlusskappe 56, mit welcher der Additivbehälter 5 verschlossen geliefert und bei Bedarf zwischendurch entnommen und wieder verschlossen werden kann.

Figur 7 zeigt das Aufsetzteil 54 in einer Ansicht von unten, mit seiner Auflagekontur 55 und einer Zentrierkerbe 551, in welche der Zentriersteg 414 des Innenbehälters 4 eingreifen kann. Von einer Verschlusskappe 56 verschlossen wird ein Auslass 521, der mit einer Kreuzkontur 522 verlegt ist, um eine Wiederbefüllung des Additivbehälters 5 zu erschweren. Eine Sperrgeometrie 59 sorgt dafür, dass eine Verbindung mit dem Auslassverbinder 53 nur in einer korrekten Ausrichtung erfolgreich möglich ist.

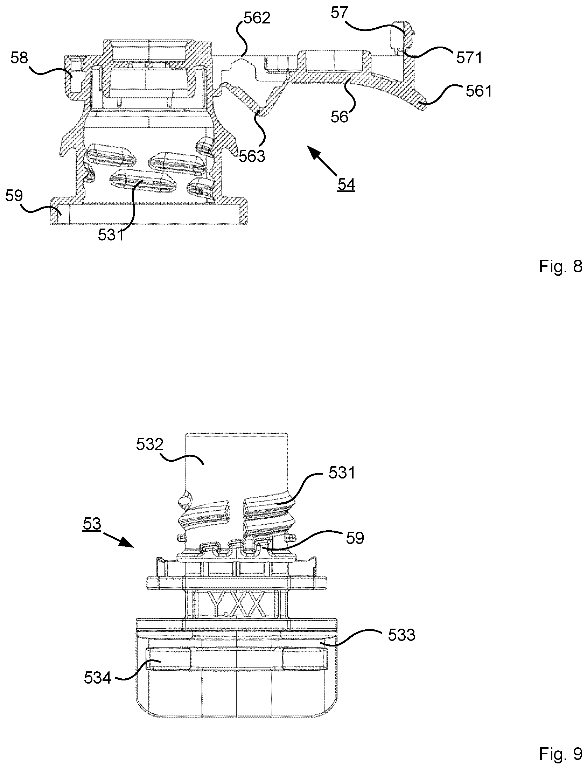

Das Aufsetzteil 54 ist in Figur 8 nochmals in einer seitlichen Querschnittsdarstellung wiedergegeben. Hier kann erkannt werden, dass Prellkonturen 531 vorgegeben sind, die mit Prellkonturen eines Auslassverbinders 53 zusammenwirken können. Die Verschlusskappe 56 weist eine Nase 561 auf, an der die Verschlusskappe 56 in einem geschlossenen Zustand gegriffen und geöffnet werden kann. Nach einer Erstbefüllung wird die Verschlusskappe 56 geschlossen, wobei eine Abreißlasche 57 in einen Abreißkäfig 58 eingesteckt wird. Bei einem erneuten Öffnen wird die Abreißlasche 57 aufgrund von Sollbruchstellen 571 an ihrer Verbindung zu der Verschlusskappe 56 abreißen und verbleibt in dem Abreißkäfig 58. Es kann an diesem Abreißvorgang erkannt werden, ob der Additivbehälter 5 noch original verschlossen ist. Die Verschlusskappe 56 ist über ein Filmscharnier 562 und ein Gelenk 563 mit dem Aufsetzteil 54 gelenkig verbunden.

Beim Aufprellen oder Aufpressen auf einen Auslassverbinder 53, welcher mit einem Einsteckteil 533 in den Folienbeutel 51 eingeschweißt und dort mit einer Auszugsicherung 534 gesichert ist, geraten die jeweiligen Prellkonturen 531 in gegenseitigen Eingriff. Sperrgeometrien 59 an einem Hals 532 des Auslassverbinders 53 sorgen für eine definierte gegenseitige Lage. Der in Figur 9 gezeigte Auslassverbinder ist lediglich ein allgemeines Beispiel und seine Formen sind nicht mit dem Aufsetzteil 54 in Figuren 7 und 8 direkt verbindbar.

Die Teile des Additivbehälters 5 sind ausschließlich aus einem Material, vorzugsweise aus Polypropylen, hergestellt, so dass ein Recycling des Additivbehälters 5 ohne Weiteres möglich ist. Der Folienbeutel ist aus einem Dreischichtlaminat hergestellt, welches ein verstrecktes Polypropylen, ein verstrecktes Polypropylen mit einer Barriere, und eine koextrudierte Siegelschicht aus Polypropylen umfasst. Auch das Auslasspassstück 52 ist vollständig aus Polypropylen, vorzugsweise im Spritzgussverfahren, hergestellt.

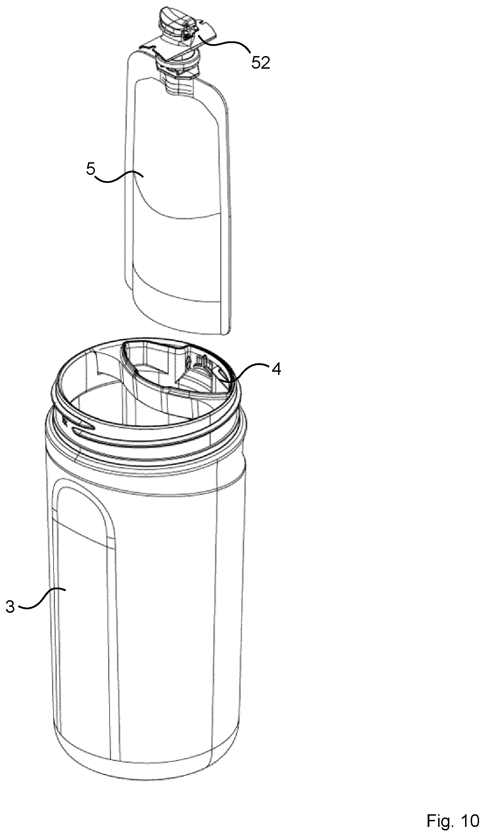

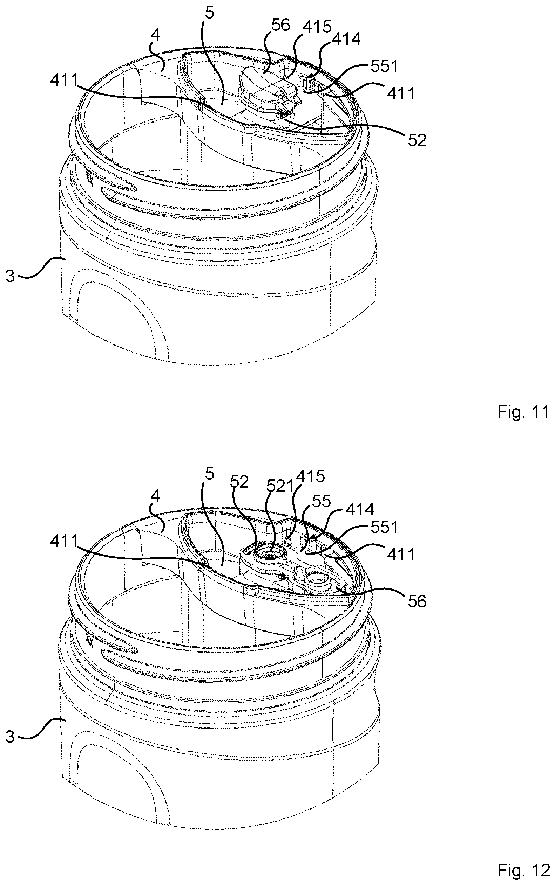

Ein solcher Additivbehälter 5 wird gemäß Figur 10 in den Innenbehälter 4 eingesteckt, welcher bereits wie oben beschrieben in den Becher 3 eingesetzt wurde. Das an dem Additivbehälter 5 befestigte Auslasspassstück 52 wird dabei, wie in Figur 11 gezeigt, an dem Innenbehälter 4 eingeclipst.

Das Auslasspassstück 52 des Additivbehälters 5 wird in die Verbreiterungen 411 des Innenbehälters 4 eingelegt, die an einem Scheitel des Aufnahmerands 42 und an einem gegenüberliegenden Scheitel des Anlagerands 43 angeordnet sind, so dass die Auflagekontur 55 des Auslasspassstücks 52 den Innenbehälter 4 quer überspannt. Dabei liegt die gewölbte Auflagekontur 55 auf der Auflageschulter 412 auf, wobei die Zentrierkerbe 551 um den Zentriersteg 414 herum anliegt. Die Rastnasen 415 des Innenbehälters 4 übergreifen im eingelegten Zustand die Auflagekontur 55, so dass das Auslasspassstück 52 in dem Innenbehälter 4 in einer definierten Position gehalten ist. Dies ist auch dann noch der Fall, wenn die Verschlusskappe 56 des Auslasspassstücks 52 im eingesetzten Zustand geöffnet wird, wie in Figur 12 gezeigt, weil die hierbei aufgewandte Zugkraft quer zu der Entnahmerichtung gerichtet ist und eine entsprechende Verdrehung durch den Zentriersteg 414 verhindert wird.

Der Becher kann auch mit eingesetztem Innenbehälter 4 mit einer Flüssigkeit befüllt werden und ist danach einsatzbereit. Um die Trinkflasche 1 nutzen zu können, muss lediglich noch der Deckel 2 wieder aufgesetzt werden.

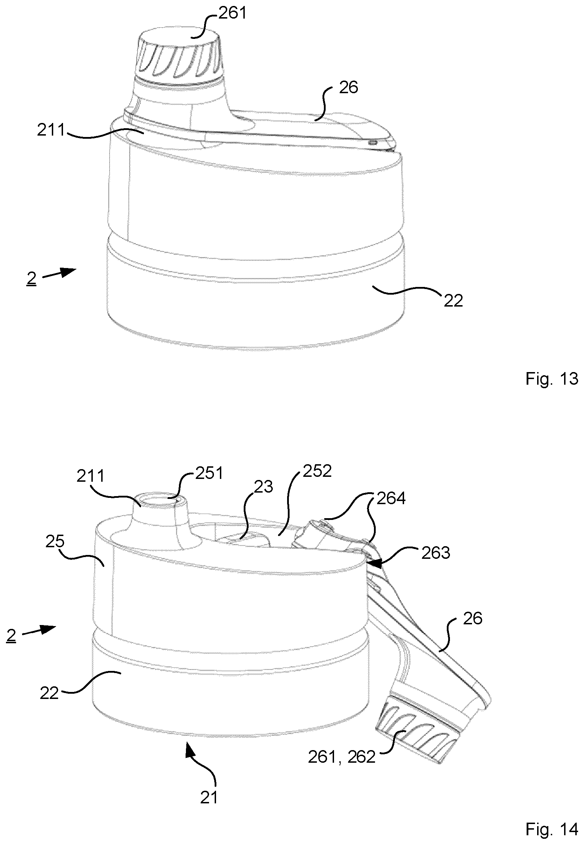

Der Deckel 2 ist nochmals als Ganzes in Figur 13 dargestellt. Er wird auf den Becher 3 lagerichtig aufgesetzt und in der Aufsetzposition mithilfe der Überwurfmutter 22 befestigt. Diese ist zwischen einem Basisteil 21 und einem Aufsetzteil 25 drehfrei aufgenommen und sichert den Deckel 2 auf einem Rand des Bechers 3. Eine Verschlusslasche 26 verdeckt zunächst den Entnahmestutzen 211 und ist an diesem mit einem Verschluss 261 befestigt. Wird der Verschluss 261 durch Drehung von dem Entnahmestutzen 211 gelöst, so kann die Verschlusslasche 26, wie in Figur 14 gezeigt, um ein Gelenk 263 herum von dem Entnahmestutzen 211 weggeklappt werden. Eine Auslassöffnung 251 des Entnahmestutzens 211 wird dadurch frei, ebenso wie eine Vertiefung 252, in welcher eine Verstelleinrichtung 23 aufgenommen ist, mit welcher die Zudosierung des Additivs beeinflusst werden kann. Hierauf wird im Folgenden noch näher eingegangen. Im Bereich des Gelenks 263 sind zwei Dichtelemente 264 an der Verschlusslasche 26 angeordnet, welche in einem geschlossenen Zustand der Verschlusslasche 26 auf zwei Belüftungsöffnungen 213 aufgepresst werden, diese aber im offenen Zustand freigeben. Hierdurch kann bei geöffneter Verschlusslasche 26 Luft in die Trinkflasche 1 strömen, während ein Austreten von Flüssigkeit im geschlossenen Zustand verhindert ist.

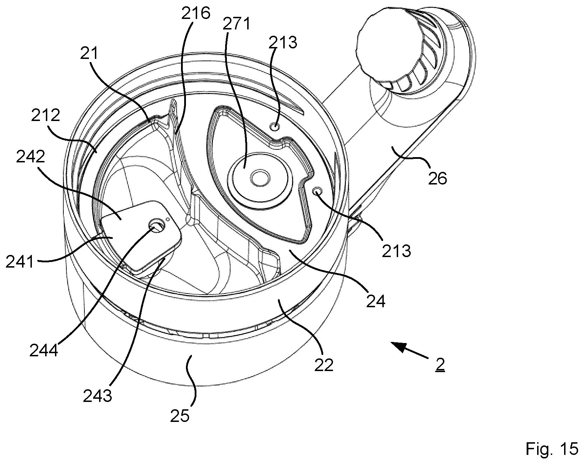

Die Gegenstücke dieser Belüftungsöffnungen 213 sind in Figur 15 dargestellt und münden im Bereich der Dichtkontur 44 des Innenbehälters 4. Eine der Belüftungsöffnungen 213 mündet hierbei in den Innenbehälter 4, die andere mündet über der Einbuchtung 441 der Dichtkontur 44 und ist über den Umgangskanal 442 mit dem Becher verbunden, so dass dieser über die zweite Belüftungsöffnung 213 belüftet ist. Figur 15 zeigt den Deckel 2 von unten her gesehen, mit Blick auf das Basisteil 21 des Deckels 2. An dem Basisteil 21 ist zum Einen ein Anschlagsteg 216 angeformt, welcher zur lagerichtigen Positionierung an dem Anlagerand 43 des Innenbehälters 4 angelegt wird, zum Anderen nimmt das Basisteil 21 einen Kontaktstutzen 271 auf, welcher den Auslass 521 des Auslasspassstücks 52 bei einem Verschluss der Trinkflasche 1 dichtend kontaktiert. Dadurch, dass bei der Trinkflasche 1 der Deckel 2 stets in einer definierten Position gegenüber dem Becher 3 positioniert ist und auch der Additivbehälter 5 mit seinem Auslass 521 definiert zu dem Deckel 2 gehalten ist, kann auf eine manuelle Verbindung des Additivbehälters 5 mit dem Entnahmestutzen 211 verzichtet werden. Es reicht die Kontaktierung zwischen Kontaktstutzen 271 und Auslass 521.

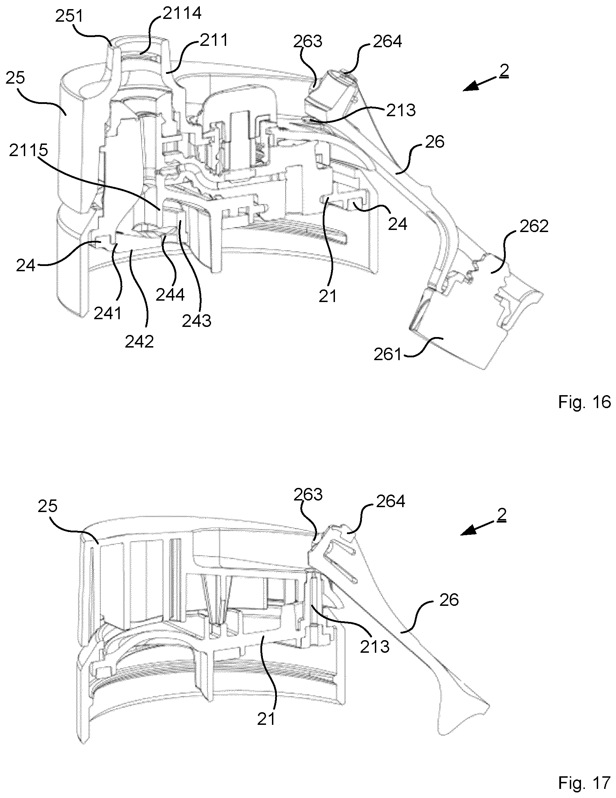

Ferner weist das Basisteil 21 eine Dichtung 24 auf. Diese ist zwischen den ersten Verbindungsrand 212 des Deckels und den zweiten Verbindungsrand 32 des Bechers zwischengelegt und sorgt für eine nach außen hin dichte Verbindung. Der Dichtung 24 ist aber auch eine Störkontur 241 angeformt, welche einen Einlassbereich des Entnahmestutzens 211 zumindest teilweise verdeckt. Hierzu weist die Störkontur 241 eine Anschlagplatte 242 auf, gegen welche ankommende Flüssigkeit zunächst anschlägt, anstatt direkt in den Entnahmestutzen 211 durchlaufen zu können. Es wird hierdurch dafür gesorgt, dass die ankommende Flüssigkeit, welche den Entnahmestutzen 211 auf direktem Weg schneller erreichen würde als ein angesaugtes Additiv aus dem Additivbehälter 5, nicht zunächst ungemischt am Entnahmestutzen 211 anliegt, sondern dass aufgrund des Umwegs die Flüssigkeit und das Additiv den Entnahmestutzen 211 mehr oder weniger gleichzeitig erreichen. Hierzu kann der Anschlagfläche 242 zusätzlich ein Verzögerungsrand 243 zugeordnet sein, um den die Flüssigkeit noch zusätzlich herumfließen muss. Wie in Figur 16 gezeigt kann im Gegenzug der Entnahmestutzen 211 in Richtung des Bechers 3 durch eine Zugangskontur 2115, etwa in Zylinderform, verlängert sein, um zwischen dem Verzögerungsrand 243 und der Zugangskontur 2115 ein Labyrinth zu erzeugen. Mithilfe einer Abtropföffnung 244 kann in dem Labyrinth zurückgebliebene Flüssigkeit beim Absetzen der Trinkflasche wieder in den Becher 3 zurücklaufen.

Wird nach dem Absetzen der Trinkflasche 1 diese durch ein Zurückklappen der Verschlusslasche 26 wieder verschlossen und dabei das Schraubelement 262 in Eingriff des Gegenschraubelements 2114 am Entnahmestutzen 211 gebracht, um die Auslassöffnung 251 zu versperren, so drücken die Dichtelemente 264 auf die Belüftungsöffnungen 213 verriegeln auch insoweit das Innere der Trinkflasche 1. In Figur 17 ist ein Schnitt durch die Belüftungsöffnung 213 gelegt, welche einen Dom an dem Basisteil 21 umfasst, der bis zu einer Aussparung an dem Aufsetzteil 25 reicht.

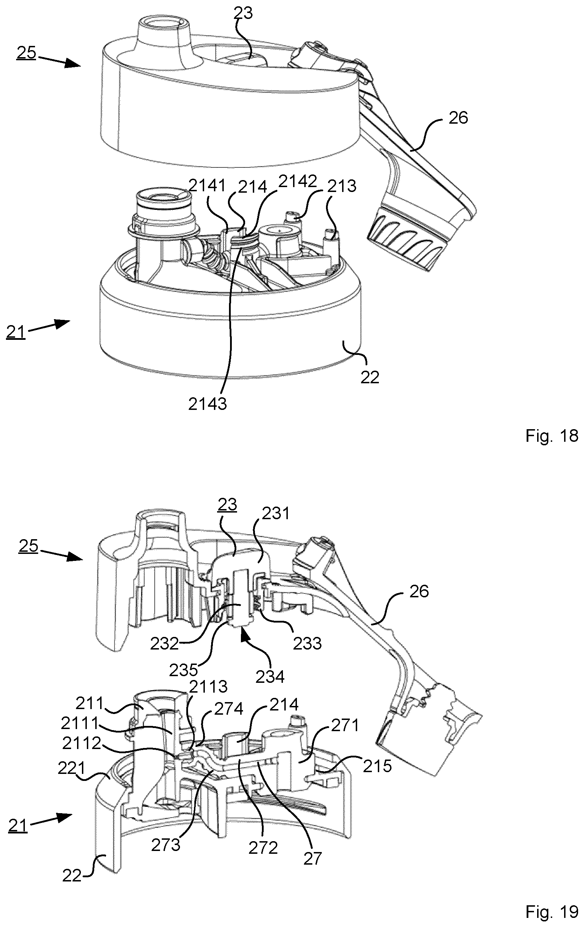

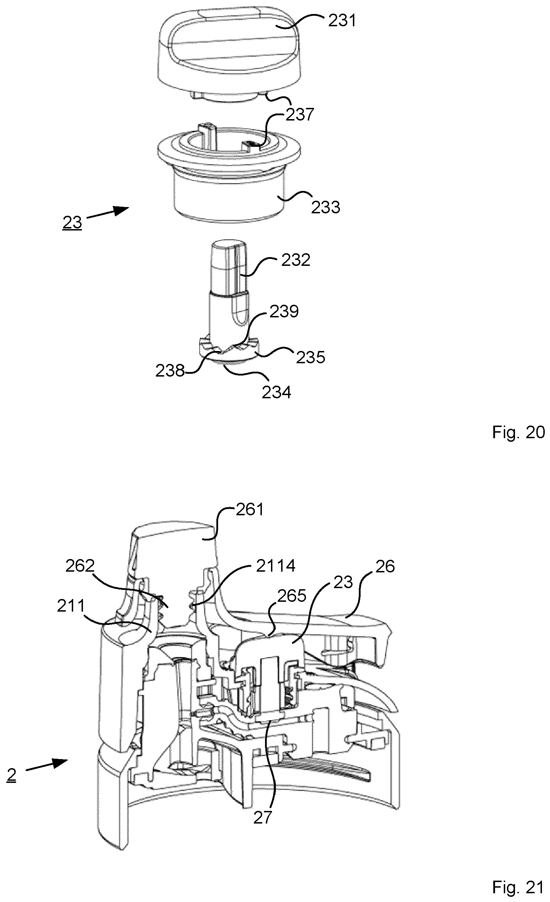

Basisteil 21 und Aufsetzteil 25 des Deckels 2 können voneinander getrennt werden, indem die Verstelleinrichtung 23 rechtsherum aufgedreht wird. Figur 18 zeigt hierbei zunächst die voneinander aufgrund eines Lösens der Schraubhülse 233 von dem Quetschdom 214 getrennten Teile 21 und 25 des Deckels 2, in Figur 19 ist ein Querschnitt durch die beiden Teile 21 und 25 dargestellt. Die Verstelleinrichtung 23 umfasst mehrere Teile, die in Figur 20 wiedergegeben sind.

Ein Verstellgriff 231 ist auf einen Verstellschaft 232 aufgesteckt, wobei zwischen diesen beiden Teilen eine Schraubhülse 233 aufgenommen ist. Die Schraubhülse 233 wird von dem Verstellgriff 231 mithilfe einer Klauenkupplung betätigt, indem sowohl dem Verstellgriff 231 als auch der Schraubhülse 233 jeweils Klauenelemente einer Klauenkupplung 237 zugeordnet sind. Am Ende des Verstellschaftes 232 ist ein Druckende 234 vorgesehen, welches gegen die Wandung einer Verbindungsleitung 27 gedrückt werden kann. Diese verläuft von dem Kontaktstutzen 271, der von einer Aufnahmekontur 215 gehalten und auf dem Basisteil 21 aufgesteckt ist und sich in Kontakt mit dem Auslass 521 des Additivbehälters 5 befindet, über einen durch den Quetschdom 214 verlegten Schlauchabschnitt 272 und einen flexiblen Biegeabschnitt 273 bis zu einem an dem Leitungsanschluss 2113 der Zugangsöffnung 2112 angeschlossenen Verbindungsanschluss 274 durch den Deckel 2 bis zur Innenwand 2111 des Entnahmestutzens 211. Der Quetschdom 214 umfasst einen ersten Wandabschnitt 2141 und einen zweiten Wandabschnitt 2142, zwischen denen ein Abstand freigehalten ist, durch den der Schlauchabschnitt 272 verlegt ist. An dem Quetschdom 214 ist ein Außengewinde 2143 vorgesehen, welches mit einem Innengewinde der Schraubhülse 233 zusammenwirkt, so dass durch eine Betätigung der Verstelleinrichtung 23 mithilfe des Verstellgriffs 231 aufgrund der Klauenkupplung 237 die Schraubhülse 233 verdreht wird und sich dabei im Falle einer korrekten Positionierung auf den Quetschdom 214 aufschraubt.

Der Verstellschaft 232 gerät dabei mit dem Druckende 234 in Anlage zu dem Schlauchabschnitt 272 der Verbindungsleitung 27. Wird nun Die Verstelleinrichtung 23 vollständig rechtsherum auf den Quetschdom 214 geschraubt, so hat die Klauenkupplung 237 linksherum ein Drehspiel von annähernd 180°. Die Schraubhülse 233 wird hierbei stehenbleiben. Die Schraubhülse 233 weist jedoch eine Anlagefläche 236 auf, welche mit einem Anlageflansch 235 des Verstellschafts 232 zusammenwirkt, wobei der Anlageflansch 235 mehrere Rampenabschnitte 238 unterschiedlicher Höhe und vorzugsweise mit Verzahnungselementen 239 aufweist, zu der die Anlagefläche 236 das Gegenstück aufweist. So drückt sich bei einer Verdrehung des Verstellschafts 232 gegenüber der Schraubhülse 233 bei Erreichen eines nächsthöheren Rampenabschnitts 238 immer weiter von der Schraubhülse 233 weg, wobei die Verzahnungselemente 239 entweder aufgrund eines Federelements oder aufgrund einer Federwirkung der darunterliegenden Verbindungsleitung 27 in Eingriff mit Gegenverzahnungselementen der Anlagefläche 236 gedrückt werden. Diese können vorzugsweise lediglich einen Zahn oder ein gegenüberliegendes Zahnpaar zum Eingriff in die Rampenabschnitte 238 umfassen, welche bei einem gegenüberliegenden Zahnpaar ebenfalls um 180° versetzt doppelt vorgesehen sein kann. Hierdurch wird die Verbindungsleitung 27 im Bereich des Schlauchabschnitts 272 in dem Quetschdom 214 durch das Druckende 234 des Verstellschafts 232 immer weiter zusammengedrückt, bis ein minimaler Durchlass erreicht ist. Dies ist vorzugsweise dann der Fall, wenn der Verstellgriff 231 sein Drehspiel aufgebraucht hat und die Klauenkupplung 237 auf der anderen Seite in Eingriff kommt.

Auf diese Weise kann die Verstelleinrichtung 23 die Leitung in mehreren Stufen, nämlich so vielen Stufen wie unterschiedlich hohe Rampenabschnitte 238 an dem Anlageflansch 235 vorgesehen sind, zusammendrücken. Eine vollständige Sperrung wird hierdurch jedoch nicht bewirkt. Diese erfolgt erst, wenn, wie in Figur 21 gezeigt, die Verschlusslasche 26 sich in ihrer Verschlussposition befindet, also der Verschluss 261 mit seinem Schraubelement 262 in das Gegenschraubelement 2114 des Entnahmestutzens 211 eingedreht ist. Dann drückt die Verschlusslasche 26 mit einem mittig der Verstelleinrichtung 23 im geschlossenen Zustand zugewandten Druckelement 265 auf die Verstelleinrichtung 23 und drückt diese auf die Verbindungsleitung 27 nieder, wodurch die Verbindungsleitung nunmehr vollständig verschlossen wird, so dass kein Additiv in den Entnahmestutzen 211 austreten kann und keine bei einem Umkippen der Trinkflasche 1 am Entnahmestutzen 211 anstehende Flüssigkeit in den Additivbehälter 5 gelangen kann.

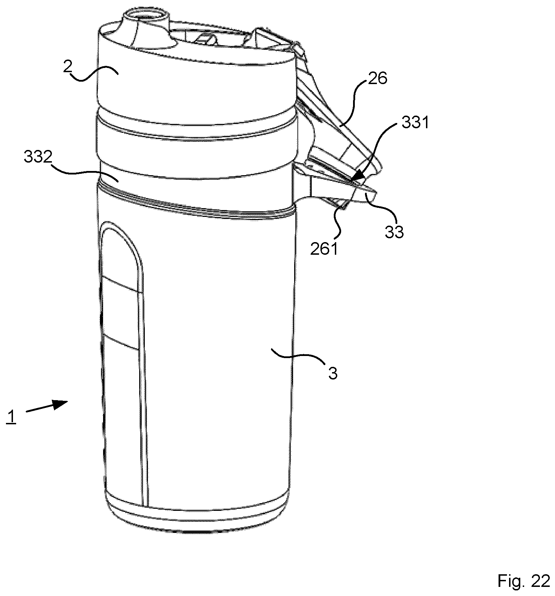

Figur 22 zeigt schließlich eine Variante der Trinkflasche 1 mit einer Tragelasche 33. Eine solche Tragelasche 33 kann eine Manschette 332 aufweisen, mit welcher sie um den Becher 3 herumgreift und mit der Trinkflasche 1 verbunden ist, sowie eine abstehende Lasche mit einer Eingriffsöffnung 331, in welcher die Trinkflasche 1 beim Tragen gehalten wird. Diese Eingriffsöffnung 331 kann aber auch so groß sein, dass der Verschluss 261 der Verschlusslasche 26 darin eingehängt werden kann, so dass die Verschlusslasche 26 nicht während des Trinkvorgangs zuklappen kann.

Vorstehend beschrieben ist somit eine Trinkflasche, welche sehr einfach handhabbar ist, leicht gereinigt und hygienisch bedient werden kann und schließlich auch unproblematisch ohne eingesetzten Innenbehälter verwendet werden kann.

### BEZUGSZEICHENLISTE

- 1: Trinkflasche
- 2: Deckel
- 21: Basisteil
- 211: Entnahmestutzen
- 2111: Innenwand
- 2112: Zugangsöffnung
- 2113: Leitungsanschluss
- 2114: Gegenschraubelement
- 2115: Zugangskontur
- 212: erster Verbindungsrand
- 213: Belüftungsöffnung
- 214: Quetschdom
- 2141: erster Wandabschnitt
- 2142: zweiter Wandabschnitt
- 2143: Außengewinde
- 215: Aufnahmekontur
- 216: Anschlagsteg
- 22: Überwurfmutter
- 221: Einkragung
- 23: Verstelleinrichtung
- 231: Verstellgriff
- 232: Verstellschaft
- 233: Schraubhülse
- 234: Druckende
- 235: Anlageflansch
- 236: Anlagefläche
- 237: Klauenkupplung
- 238: Rampenabschnitt
- 239: Verzahnungselemente
- 24: Dichtung
- 241: Störkontur
- 242: Anschlagfläche
- 243: Verzögerungsrand
- 244: Abtropföffnung
- 25: Aufsetzteil
- 251: Auslassöffnung
- 252: Vertiefung
- 26: Verschlusslasche
- 261: Verschluss
- 262: Schraubelement
- 263: Gelenk
- 264: Dichtelement
- 265: Druckelement
- 27: Verbindungsleitung
- 271: Kontaktstutzen
- 272: Schlauchabschnitt
- 273: Biegeabschnitt
- 274: Verbindungsanschluss
- 3: Becher
- 31: Aufnahmekontur
- 32: zweiter Verbindungsrand
- 321: Außengewinde
- 33: Tragelasche
- 331: Eingriffsöffnung
- 332: Manschette
- 4: Innenbehälter
- 41: Innenbecher
- 411: Verbreiterung
- 412: Auflageschulter
- 413: Auflagefläche
- 414: Zentriersteg
- 415: Rastnase
- 42: Aufnahmerand
- 421: Haltekontur
- 422: Klemmsteg
- 43: Anlagerand
- 44: Dichtkontur
- 441: Einbuchtung
- 442: Umgangskanal
- 5: Additivbehälter
- 51: Folienbeutel
- 511: Schweißrand
- 52: Auslasspassstück
- 521: Auslass
- 522: Kreuzkontur
- 53: Auslassverbinder
- 531: Prellkontur
- 532: Hals
- 533: Einsteckteil
- 534: Auszugsicherung
- 54: Aufsetzteil
- 55: Auflagekontur
- 551: Zentrierkerbe
- 56: Verschlusskappe
- 561: Nase
- 562: Filmscharnier
- 563: Gelenk
- 57: Abreißlasche
- 571: Sollbruchstelle
- 58: Abreißkäfig
- 59: Sperrgeometrie

## Patentansprüche

1. Trinkflasche umfassend einen Becher (3) zur Aufnahme einer Flüssigkeit, einen Innenbehälter (4) zur Aufnahme eines Additivbehälters (5) mit einem Additiv, und einen Deckel (2) mit einem Entnahmestutzen (211) zur Entnahme der in dem Becher (3) aufgenommenen Flüssigkeit, wobei dem Deckel (2) eine Verbindungsleitung (27) zur Verbindung des Additivbehälters (5) mit dem Entnahmestutzen (211) zugeordnet ist, welche in eine seitliche Zugangsöffnung (2112) an einer Innenwand (2111) des Entnahmestutzens (211) mündet,
**dadurch gekennzeichnet, dass** der Innenbehälter (4) an der Innenwand des Bechers (3), vorzugsweise lösbar, befestigt ist und dass Mittel zur lagerichtigen Positionierung des Deckels (2) auf dem Becher (3) über jeweilige Verbindungsränder (212, 32) derart vorgesehen sind, dass die Verbindungsleitung (27) mit einem Kontaktstutzen (271), welcher an ihrem dem Additivbehälter (5) zugewandten Ende angeordnet ist, einen Auslass (521) des Additivbehälters (5) dichtend kontaktiert und der Deckel (2) mithilfe von Spannmitteln mit dem Becher (3) entlang der jeweiligen Verbindungsränder (212, 32) dichtend verbindbar ist.

2. Trinkflasche gemäß Anspruch 1, **dadurch gekennzeichnet, dass** der Becher (3) und der Deckel (2) miteinander korrespondierende, runde Verbindungsränder (212, 32) aufweisen, wobei die Spannmittel eine an einem ersten Verbindungsrand (212) frei drehend aufgenommene Überwurfmutter (22) umfassen, welche mit wenigstens einem an einem korrespondierenden zweiten Verbindungsrand (32) angeformten Gewinde (321) oder Gewindeabschnitt zusammenwirkt.

3. Trinkflasche gemäß Anspruch 1, **dadurch gekennzeichnet, dass** der Becher (3) und der Deckel (2) miteinander korrespondierende Verbindungsränder (212, 32) aufweisen, wobei die Spannmittel wenigstens einen, einem ersten Verbindungsrand (212) zugeordneten, Schnappverschluss umfassen, welcher mit wenigstens einem, einem zweiten Verbindungsrand (32) zugeordneten, Rastelement zusammenwirkt.

4. Trinkflasche gemäß einem der vorhergehenden Ansprüche, **dadurch gekennzeichnet, dass** der Becher (3) entlang seines Verbindungsrands (32) zumindest abschnittsweise eine inwendige Aufnahmekontur (31) zur Aufnahme eines korrespondierenden Aufnahmerands (42) des Innenbehälters (4) ausbildet.

5. Trinkflasche gemäß Anspruch 4, **dadurch gekennzeichnet, dass** die Aufnahmekontur (31) eine Verjüngung der Becherwandung entlang wenigstens eines Abschnitts des Verbindungsrands (32) umfasst, wobei der Innenbehälter (4) eine mit der Aufnahmekontur (31) zumindest abschnittsweise korrespondierende Haltekontur (421) aufweist.

6. Trinkflasche gemäß einem der vorhergehenden Ansprüche, **dadurch gekennzeichnet, dass** die Mittel zur lagerichtigen Positionierung des Deckels (2) gegenüber dem Becher (3) wenigstens ein Anschlagelement umfassen, welches an einem korrespondierenden Gegenanschlag drehfest anliegt.

7. Trinkflasche gemäß Anspruch 6, **dadurch gekennzeichnet, dass** das Anschlagelement an einer Innenseite des Deckels (2) ausgebildet ist und bei lagerichtiger Positionierung so an dem Innenbehälter (4) als Gegenanschlag anliegt, dass eine Drehung und/oder ein Versatz des Deckels (2) im Verhältnis zum Innenbehälter (4) verunmöglicht ist.

8. Trinkflasche gemäß Anspruch 7, **dadurch gekennzeichnet, dass** das Anschlagelement einen Anschlagsteg (216) ausbildet, welcher bei einer lagerichtigen Positionierung des Deckels (2) auf dem Becher (3) entlang eines innenliegenden Anlagerands (43) des Innenbehälters (4) verläuft.

9. Trinkflasche gemäß einem der Ansprüche 7 oder 8, **dadurch gekennzeichnet, dass** das Anschlagelement einen Anschlagsteg (216) ausbildet, welcher bei einer lagerichtigen Positionierung des Deckels (2) auf dem Becher (3) entlang einer Außenkontur des Bechers (3) verläuft und dessen Enden an dem Innenbehälter (4) anliegen.

10. Trinkflasche gemäß einem der vorhergehenden Ansprüche, **dadurch gekennzeichnet, dass** bei lagerichtiger Positionierung des Deckels (2) auf dem Becher (3) zwischen den Verbindungsrändern (212, 32) eine umlaufende Dichtung (24) zugeordnet ist, welche mit dem Verbindungsrand (212) des Deckels (2) und einer Dichtkontur (44) des Innenbehälters (4) dichtend zusammenwirkt.

11. Trinkflasche gemäß einem der vorhergehenden Ansprüche, **dadurch gekennzeichnet, dass** der Deckel (2) wenigstens eine Belüftungsöffnung (213) zum Nachströmen von Luft aufweist, welche in einen Bereich des Deckels (2) mündet, welcher bei dessen lagerichtiger Positionierung über dem Becher (3), insbesondere über dem in dem Becher (3) aufgenommenen Innenbehälter (4), liegt.

12. Trinkflasche gemäß Anspruch 11, **dadurch gekennzeichnet, dass** die wenigstens eine Belüftungsöffnung (213) an dem Deckel (2) von einer Verschlusslasche (26) übergriffen ist, welche über ein Gelenk (263) mit dem Deckel (2) verbunden ist und ein freies Ende aufweist, dem ein Verschluss (261) zur Abdichtung des Entnahmestutzens (211) zugeordnet ist, wobei der Verschlusslasche (26) wenigstens ein Dichtelement (264) zugeordnet ist, welches die wenigstens eine Belüftungsöffnung (213) dichtend verschließt, wenn der Verschluss (261) mit dem Entnahmestutzen (211) verbunden ist.

13. Trinkflasche gemäß Anspruch 12, **dadurch gekennzeichnet, dass** der Verschluss (261) ein Schraubelement (262) umfasst, welches mit Gegenschraubelementen (2114) des Entnahmestutzens (211) zusammenwirkt.

14. Trinkflasche gemäß einem der Ansprüche 12 oder 13, **dadurch gekennzeichnet, dass** die Verschlusslasche (26) in einer geöffneten Position eine Lagesicherung aufweist, in welcher ein Zurückklappen der Verschlusslasche (26) in Richtung einer geschlossenen Position vermieden ist.

15. Trinkflasche gemäß Anspruch 14, **dadurch gekennzeichnet, dass** dem Becher (3) und/oder dem Deckel (2) eine Tragelasche (33) zugeordnet ist und der Verschluss (261) der Verschlusslasche (26) in einer geöffneten Position der Verschlusslasche (26) derart mit der Tragelasche (33) zusammenwirkt, dass ein Trennen von Verschlusslasche (26) und Tragelasche (33) mehr Kraft erfordert als die Gewichtskraft der Verschlusslasche (26).
